# EUROPEAN PATENT SPECIFICATION

(11) **EP 1 635 197 B1**
(45) Date of publication and mention of the grant of the patent: **01.12.2010**
(21) Application number: 04746291.6
(22) Date of filing: 17.06.2004
(51) Int. Cl.: G02B 5/18, G02B 1/04, B32B 17/10, B29D 11/00

(54) **OPTICAL ELEMENT**
OPTISCHES ELEMENT
ELEMENT OPTIQUE

(30) Priority: 19.06.2003 JP 2003174382
(43) Date of publication of application: 15.03.2006
(73) Proprietor: NIKON CORPORATION, Chiyoda-ku Tokyo 100-8331 (JP)
(72) Inventor: MIYAKAWA, Akiko, c/o NIKON CORPORATION, Tokyo 1008331 (JP); NAKAMURA, Toru, c/o NIKON CORPORATION, Tokyo 1008331 (JP)
(74) Representative: HOFFMANN EITLE
(86) International application number: PCT/JP2004/008822
(87) International publication number: WO 2004/113971

(56) References cited:
- EP-A- 1 193 512
- EP-A- 1 489 440
- EP-A2- 1 072 906
- JP-A- 11 202 111
- JP-A- 2006 177 994
- US-A- 5 847 877
- US-A- 6 157 488
- US-A1- 2005 014 088

## Description

### Technical Field

The present invention relates to a diffractive optical element. An embodiment of the invention may be a diffractive lens that is provided with specified optical characteristics by laminating two or more layers of resins on a matrix material.

### Background Art

Optical elements have been publicly known in which a resin layer having a different refractive index from a matrix material such as a glass is formed on the surface of this matrix material, and the interface between this matrix material and the resin layer is formed into a particular shape, thus as a whole providing the characteristics of an optical element such as a diffractive lens. However, in such an optical element, the surface of a matrix material such as a glass must be worked, so that there is encountered the problem that this process of working the glass requires effort.

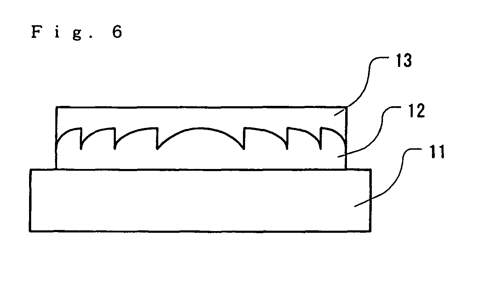

As an optical element that solves such a problem, an optical element is available in which a first resin layer having a specified surface shape pattern is formed on the surface of a matrix material such as a glass, a second resin layer having a different refractive index from the resin in the first layer is formed on top of this first resin layer, and specified optical characteristics are obtained by utilizing interference and refraction of light between these resins. This example is shown in Figure 6. Figure 6 is a sectional view; hatching is omitted since hatching would make the figure rather difficult to understand.

In Figure 6, a first resin layer 12 is formed on a transparent substrate 11 consisting of a glass or the like that constitutes the matrix material via a silane coupling treatment layer. Furthermore, a pattern is formed on the surface of the resin layer 12 so that optical characteristics of a diffractive lens or the like are provided. A silane coupling treatment layer is further formed on the resin layer 12, and a second resin layer 13 with a different refractive index from the first resin layer 12 is formed on this silane coupling treatment layer. Moreover, specified optical characteristics are provided by the difference in the refractive index between the first resin layer 12 and the second resin layer 13 and the shape of the pattern formed between the two layers. Furthermore, the formation of the silane coupling treatment layers is not necessarily an essential requirement.

Figure 6 is an element consisting of the transparent substrate 11 constituting the matrix material and the two resin layers 12 and 13; however, it would also be possible to provide a single or a plurality of resin layers having different refractive indices between the layers on top of the resin layer 13 as needed. Such an example of an optical element is described, for example, in Japanese Patent Application Kokai No. H9-127321.

In the case of optical elements that are formed by superimposing a plurality of resin layers on a matrix material in this manner, such optical elements have been designed with the same concept as in the formation of a single resin layer on a matrix material. Since the refractive index is greater with glass which is a commonly used matrix material than with resin, in cases where the design is performed with the same concept, the design is such that between the two layers of resins, one with a higher refractive index is provided on the side of the matrix material, and one with a smaller refractive index is exposed to the outside air, so that this has not been a design that takes environmental durability into account. Accordingly, there are cases in which the resin layer that is formed as the uppermost layer (i.e., the surface on the side opposite from the matrix material) and that is exposed to the outside air is scratched, or in which the adhesion of an antireflection film is poor.

In addition, when a diffractive optical surface is resin-molded with a mold, in order to improve the peeling characteristics of the mold and molded resin, gradients called "drafts" may be formed in the step structure portions of the diffractive optical surface. The optical element described above also has a problem in that flare is generated in the draft portions in such a case as well.

EP 1 072 906 A2 and EP 1 193 512 A2 disclose optical elements in which relief patterns are formed on each of the two elements formed on a matrix material, the two elements being set adjacent to each other such that the relief pattern of one faces the relief pattern of the other.

The present invention was devised in light of the above-described circumstances surrounding the prior art.

### Summary of the Invention

According to the present invention, there is provided a diffractive optical element comprising a matrix material having a negative optical power; a first resin layer formed on the matrix material; a second resin layer formed on the first resin layer and having a different refractive index from the first resin layer; and a relief pattern shape provided at an interface between the first resin layer and the second resin layer wherein the relief pattern shape consists of repetitions of a pattern which is such that the thickness of the first resin layer gradually decreases from the center of the first resin layer toward the edges and then subsequently sharply increases, but not at an abrupt vertical angle, in order to facilitate the peeling characteristics of the first resin from a mold and such that the generation of flare is reduced; wherein the refractive index of the first resin layer is smaller than that of the second resin layer.

With embodiments of the present invention, the generation of flare can be reduced, since, as will be described later in the Detailed Description section, with embodiments of the invention, after a first resin layer is formed between the matrix material and mold, in the portions of the relief pattern where the thickness of the first resin layer increases, the thickness is not increased at an abrupt vertical angle, but has a sharp-gradient increase in order to facilitate the peeling characteristics of the first resin and mold.

In this case, light rays incident on the relief pattern surface are oriented away from the center of the first resin layer due to the negative optical power of the matrix material; since the direction of the sharp gradients is the same as the direction of these light rays, it is possible to reduce the light rays crossing the portion of the interface having the sharp gradients. Accordingly, the generation of flare can be reduced.

In preferred embodiments of the present invention, the diffractive optical element further comprises the diffractive optical element according to claim 1, further comprising one or more resin layers successively formed on the second resin layer, wherein the refractive index of each resin layer of the one or more resin layers successively formed on the second resin layer is different from that of the resin layer formed underneath.

A first advantage obtainable with embodiments of the present invention is to provide an optical element which is formed by superimposing a plurality of resin layers on a matrix material and which has good environmental durability. Furthermore, a second advantage which may be attained is to provide a diffractive optical element which tends not to generate flare in the diffractive optical surface that is provided with drafts.

### Brief Description of the Drawings

To enable a better understanding of the present invention, and to show how the same may be carried into effect, reference will now be made, by way of example only, to the accompanying drawings, in which:-
Figure 1 is a diagram used to illustrate working configurations not forming part of the present invention;
Figures 2(a) and (b) are diagrams used to illustrate other working configurations not forming part of the present invention;
Figures 3(a) and (b) are model diagrams of the diffractive optical surface shown in Figures 2(a) and (b) , respectively, as seen in enlargement;
Figure 4 is a diagram showing the structure in cases where a concave power is also given to a transparent substrate when a concave power is given to a diffractive optical element, where Figure 4(a) illustrates an embodiment of the present invention and Figure 4 (b) illustrates a working configuration not forming part of the present invention;
Figures 5 (a) and (b) are model diagrams of the diffractive optical surfaces shown in Figures 4 (a) and (b), respectively, as seen in enlargement; and
Figure 6 is a diagram showing a conventional (prior art) example of an optical element consisting of two layers of resins.

### Detailed Description

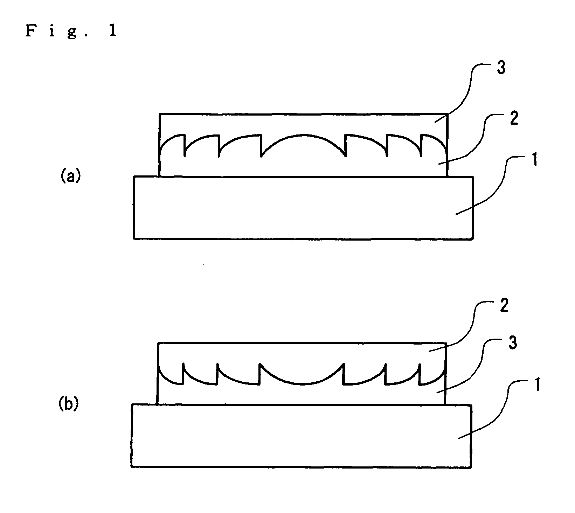

Examples of optical elements constituting working configurations which are examples not forming part of the invention or are embodiments of the present invention will be described below with reference to the figures. Figure 1 is a diagram used to illustrate a working configuration not forming part of the present invention; Figure 1 is a sectional view, but hatching is omitted. Furthermore, these optical elements have a circular shape when seen in a plan view. The same is true for the following figures. In Figure 1(a), a first resin layer 2 is formed via a silane coupling treatment layer on a transparent substrate 1 consisting of a glass or the like that constitutes the matrix material. Then, a pattern is formed on the surface of the resin layer 2 so that optical characteristics of a diffractive lens or the like are provided. A silane coupling treatment layer is further formed on the first resin layer 2, and a second resin layer 3 having a different refractive index from the first resin layer 2 is formed on top of this silane coupling treatment layer. Moreover, this optical element is designed to have specified optical characteristics by the difference in the refractive index between the first resin layer 2 and the second resin layer 3 and the shape of the pattern formed between the two resin layers.

An optical element that provides the same optical characteristics as those of the optical element shown in Figure 1 (a) can also be realized with the construction shown in Figure 1 (b). In Figure 1 (b), a first resin layer 3 is formed via a silane coupling treatment layer on a transparent substrate 1 consisting of a glass or the like that constitutes the matrix material. Then, a pattern is formed on the surface of the resin layer 3 so that optical characteristics of a diffractive lens or the like are provided. A silane coupling treatment layer is further formed on the resin layer 3, and a second resin layer 2 having a different refractive index from the first resin layer 3 is formed on top of this silane coupling treatment layer. Moreover, this optical element is designed to have specified optical characteristics by the difference in the refractive index between the first resin layer 3 and the second resin layer 2 and the shape of the pattern formed between the two resin layers. Furthermore, the formation of silane coupling treatment layers is not necessarily an essential requirement.

The shape of the interface between the resin layer 2 and resin layer 3 is vertically inverted between the case of Figure 1 (a) and the case of Figure 1 (b). Specifically, the complete vertical inversion of a combination of the resin layer 2 and resin layer 3 in (a) is (b). Accordingly, it would not be necessary to explain the fact that (a) and (b) have the same optical characteristics.

Between the resin layer 2 and resin layer 3, the resin layer that is sandwiched between the substrate 1 and the uppermost resin layer (i.e., the resin layer 2 in (a) and the resin layer 3 in (b)) does not have its surface directly contacting the outside air, but the uppermost resin layer (i.e., the resin layer 3 in (a) and the resin layer 2 in (b)) has its surface contacting the outside air.

Accordingly, after comparing the resin in the resin layer 2 and the resin in the resin layer 3 in terms of environmental durability, if the environmental durability of the resin in the resin layer 2 is superior to the environmental durability of the resin in the resin layer 3, the construction shown in (b) may be adopted, and if the environmental durability of the resin in the resin layer 3 is superior to the environmental durability of the resin in the resin layer 2, then the construction shown in (a) may be adopted.

Indicators of environmental durability include, for example, the hardness of the resins, the rate of dimensional change caused by water absorption, the gel fraction, the glass transition point, and the coefficient of linear expansion.

Furthermore, after comparing the strength (degree of resistance to alteration) against ultraviolet light of the resin in the resin layer 2 relative to the resin in the resin layer 3, if the resin in the resin layer 2 is superior to the resin in the resin layer 3, it would be possible to position the resin layer 2 in the direction of incidence of light, and if the resin in the resin layer 3 is superior to the resin in the resin layer 2, then it would also be possible to position the resin layer 3 in the direction of incidence of light.

Moreover, by adopting the construction shown in (a) if the resin in the resin layer 2 is a fluorine-containing resin, and by adopting the construction shown in (b) if the resin in the resin layer 3 is a fluorine-containing resin, it is possible to make the optical element less susceptible to scratches, as well as to prevent the adhesion of an antireflection film from deteriorating.

In addition, an example of a method for manufacturing an optical element of the type shown in Figure 1 will be described below.

Silane coupling treatment is performed on the surface of the transparent substrate 1, a metal mold having a specified shape and the transparent substrate 1 are caused to face each other, and the space between the transparent substrate 1 and metal mold is filled with an ultraviolet curing type resin that forms the resin layer 2 (in the case of Figure 1 (a)) or the resin layer 3 (in the case of Figure 1 (b)) using a dispenser or the like. Furthermore, irradiation with ultraviolet light is performed from the side of the transparent substrate 1, so that the resin is cured to form a resin layer, and the metal mold is peeled off. Moreover, silane coupling treatment is performed on the surface of this formed resin layer, this surface is caused to face a transparent mold whose surface is flat, and the space between the resin layer and transparent mold is filled with an ultraviolet curing type resin that forms the resin layer 3 (in the case of Figure 1 (a)) or the resin layer 2 (in the case of Figure 1 (b)) on the surface. In addition, ultraviolet light is irradiated from the side of the transparent mold, so that the filled resin is cured to form a resin layer, and the transparent mold is peeled off.

In cases where a complex diffractive optical surface is formed between the resin layer 2 and resin layer 3 as shown in Figure 1, it is desirable that a fluorine containing resin be used as the resin layer 2 (in the case of Figure 1 (a)) or the resin layer 3 (in the case of Figure 1 (b)) so that the peeling characteristics from the metal mold on which the diffractive optical surface is formed are improved.

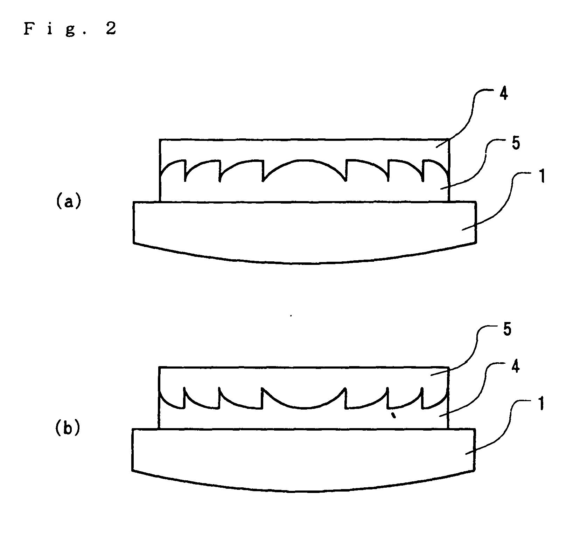

Figures 2 (a) and 2 (b) are diagrams used to illustrate other working configurations not forming part of the present invention. In a diffractive optical element, there are cases in which an optical power is also given to the transparent substrate 1 in addition to the diffractive action at the diffractive optical surface. Figure 2 is a diagram showing a case in which a positive optical power is given to the transparent substrate 1. In this case, it is common that a positive optical power is also given to the diffractive optical surface formed at the interface between the two resin layers so that this optical power will work in conjunction with the optical power of the transparent substrate 1.

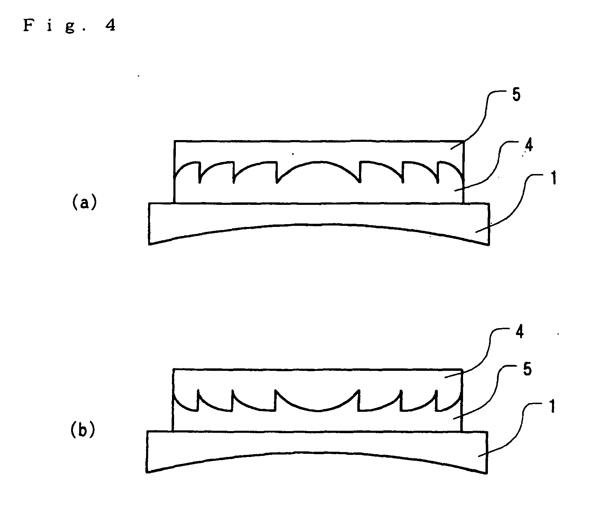

In the example shown in Figure 2, 4 is a low-refractive index resin layer, and 5 is a high-refractive index resin layer. The optical elements shown in Figure 2 are manufactured by the same method used for the optical elements shown in Figure 1.

Here, in cases where the high-refractive index resin layer 5 is formed on the transparent substrate 1, and the low-refractive index resin layer 4 is formed on top of this high-refractive index resin layer 5, the diffractive optical surface between these resin layers is as shown in Figure 2 (a) . Specifically, the thickness of the high-refractive index resin layer 5 gradually decreases moving from the center toward the edges, increases in an abrupt vertical manner upon reaching certain positions, and again gradually decreases from these positions, and such a structure is repeated.

On the other hand, in cases where the low-refractive index resin layer 4 is formed on the transparent substrate 1, and the high-refractive index resin layer 5 is formed on top of this low-refractive index resin layer 4, the diffractive optical surface between these resin layers is as shown in Figure 2 (b). Specifically, the thickness of the low-refractive index resin layer 4 gradually increases moving from the center toward the edges, decreases in an abrupt vertical manner upon reaching certain positions, and again gradually increases from these positions, and such a structure is repeated.

However, if steps are provided in this manner, there are cases in which the mold cannot be peeled off easily when the mold is to be peeled off from the resin layer that is formed between the transparent substrate 1 and the mold in the manufacturing process. Accordingly, a vertical step structure is not used, and portions corresponding to the vertical step structure are often formed as portions having sharp gradients. Such gradients are referred to as drafts.

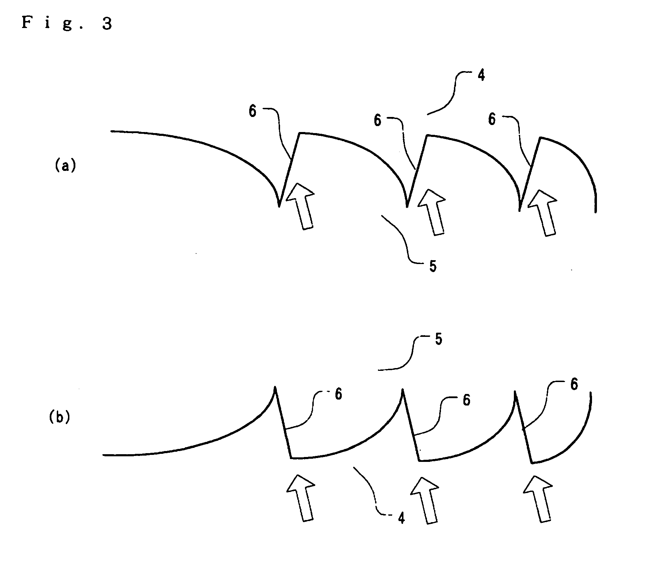

Figure 3 is a model diagram of the diffractive optical surface shown in Figure 2 as seen in enlargement. Figure 3 (a) is an enlarged view of the diffractive optical surface (relief pattern surface) between the high-refractive index resin layer 5 and low-refractive index resin layer 4 in Figure 2 (a), and Figure 3 (b) is an enlarged view of the diffractive optical surface (relief pattern surface) between the high refractive index resin layer 5 and low-refractive index resin layer 4 in Figure 2(b). In these figures, 6 indicates draft surfaces.

In Figure 3, light rays incident from the side of the transparent substrate 1 are incident on the diffractive optical surface while being oriented from the edge portion toward the central portion as indicated by the arrows by means of the convex power of the transparent substrate 1 in Figure 2. Accordingly, in the case of (a), these light rays pass through the draft surfaces 6. In the case of (b), in contrast, the light rays are close to being parallel to the draft surfaces 6, so that the light rays passing through the draft surfaces 5 are extremely reduced. Accordingly, in the case of (b), it is less likely to generate flare than in the case of (a).

Figure 4 is a diagram showing the structure in cases where a concave power is also given to a transparent substrate when a concave power is given to a diffractive optical element. Figure 4(a) illustrates an embodiment of the present invention, whereas Figure 4(b) illustrates a working configuration not forming part of the invention. In cases where the diffractive optical surface is provided with a concave power, the high-refractive index resin layer 5 and low-refractive index resin layer 4 in Figure 2 can be reversed. Accordingly, if the high-refractive index resin layer 5 and low-refractive index resin layer 4 are disposed as shown in Figures 4(a) or 4(b), and the interface between these resin layers is formed as in Figures 4(a) or 4(b), then a concave power can be given to the diffractive optical surface.

In this case as well, in the manufacturing process of these optical elements (the same as the manufacturing process of the optical elements shown in Figure 1), a resin layer (i.e., the low-refractive index resin layer 4 in the case of Figure 4 (a) and the high-refractive index resin layer 5 in the case of Figure 4 (b)) is first formed between the transparent substrate 1 and mold, and drafts are provided in order to improve the peeling characteristics when the mold is peeled off.

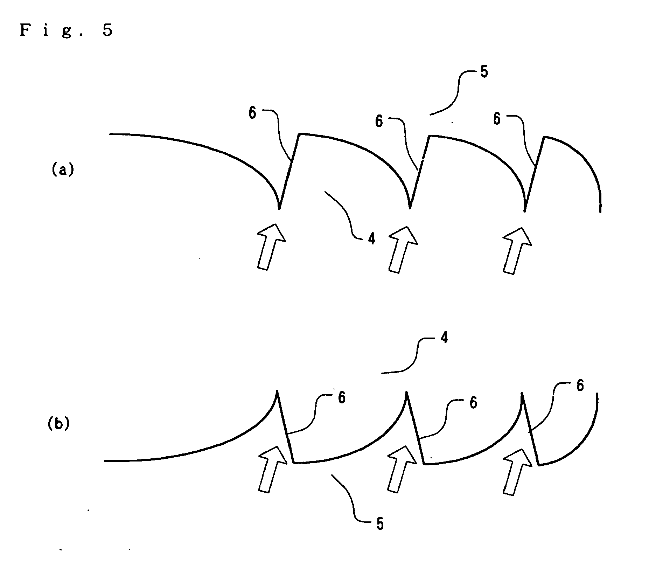

Figure 5 is a model diagram of the diffractive optical surface shown in Figure 4 as seen in enlargement. Figure 5 (a) is an enlarged view of the diffractive optical surface (relief pattern surface) between the high-refractive index resin layer 5 and low-refractive index resin layer 4 in Figure 4 (a), and Figure 5 (b) is an enlarged view of the diffractive optical surface (relief pattern surface) between the high-refractive index resin layer 5 and low-refractive index resin layer 4 in Figure 4 (b). In these figures, 6 indicates draft surfaces.

In Figure 5, light rays incident from the side of the transparent substrate 1 are incident on the diffractive optical surface while being oriented from the central portion toward the edge portion as indicated by the arrows by means of the concave power of the transparent substrate 1 in Figure 4. Accordingly, in the case of (b), these light rays pass through the draft surfaces 6. In the case of (a), on the other hand, the light rays are close to being parallel to the draft surfaces 6, so that the light rays passing through the draft surfaces 6 are extremely reduced. Accordingly, in the case of (a), it is less likely to generate flare than in the case of (b).

### (Example)

Optical elements having the shapes shown in Figure 1 (diffractive lenses having the function of a convex lens) were formed. The external diameter of the optical elements (resin portion) was 60 mm, the diffraction grating was a circular shape, the pitch in the vicinity of the center of the lens was 2 mm, with this pitch becoming narrower toward the outer circumference as shown in Figure 1, so that the pitch in the vicinity of the outer circumference was 0.12 mm.

A resin whose main component is urethane acrylate was used as the resin 2, and a resin containing fluorinated acrylate was used as the resin 3. The refractive index of the resin 2 is greater than the refractive index of the resin 3. The characteristics of the cured materials of the resin 2 and resin 3 are as shown in Table 1. In Table 1, variations in transmissivity before and after light resistance test by means of a carbon fade meter (abbreviated and described as "variations in transmissivity before and after carbon fade") indicate the results of exposure to ultraviolet light emitted from a carbon fade meter device for 500 hours. Furthermore, glass (BK7) was used as the substrate 1.

**(Table 1)**

| | Pencil hardness | Variations in transmissivity before and after carbon fade | Coefficient of water absorption | Gel fraction | Glass transition point | Coefficient of linear expansion (room temperature to 150°C) |
|---|---|---|---|---|---|---|
| Resin 2 | H | -2% | 0.4% | 98% | 110°C | 1 × 10⁻⁴ |
| Resin 3 | 2B | -5% | 0.8% | 92% | 70°C | 2 × 10⁻⁴ |

With respect to the molded optical elements, the following tests were performed: the presence or absence of coating cracking in a case where antireflection coating was applied, the presence or absence of scratching on the surface in a case where the optical elements were wiped 10 times by hand using a wipe cloth containing ethanol (commercial name: Savina Minimax (wiping cloth), manufactured by Kanebo Gohsen, Ltd.), a moisture resistance test in which the optical elements were exposed to an atmospheric temperature of 60°C and a humidity of 80% for 200 hours, and a temperature cycle test in which a temperature cycle of -40°C to 70°C was performed five times. Table 2 shows the results of comparison between the optical element using the system (a) shown in Figure 1 (i.e., the optical element in which the surface of the resin 3 is exposed to the outside air) and the optical element using the system (b) (i.e., the optical element in which the surface of the resin 2 is exposed to the outside air).

**(Table 2)**

| | Antireflection coating | Abrasion resistance | Moisture Resistance test | Temperature cycle |
|---|---|---|---|---|
| (a) | Coating cracking present | Scratching present | Discoloration (clouding) | Stripping generated |
| (b) | Coating cracking absent | Scratching absent | No discoloration | No Stripping |

As is clear from the results in Table 2, environmental durability is higher in the construction of Figure 1 (b) in which the resin 2 that has higher environmental durability is exposed to the outside air. Furthermore, it is thought that the influential factors on the presence or absence of coating cracking in the antireflection coating are the glass transition points and coefficient of linear expansion, the influential factors on the abrasion resistance are the pencil hardness and gel fraction, the influential factors on the moisture resistance test are the coefficient of water absorption and gel fraction, and the influential factors on the stripping of the resin in the temperature cycle are the glass transition point and coefficient of linear expansion.

### (Example 2)

Diffractive lenses having a positive power were manufactured. The shape of the diffraction grating was a shape shown in Figure 2 (b), the external diameter of the optical elements was 60 mm, the height of the grating was 20 µm, and the grating pitch was 2 mm in the vicinity of the center and 0.12 mm in the vicinity of the outer circumference, so that the pitch was designed to be narrower toward the outer circumferential surface.

A resin whose main component is urethane acrylate was used as the high-refractive index resin 5, and a resin containing fluorinated acrylate was used as the low-refractive index resin 4.

In the first diffractive lens, no drafts were formed in the relief pattern, so that this lens had a vertical step structure. In the second diffractive lens, drafts were formed in the relief pattern as shown in Figure 3, and these drafts were formed so that the inclination increased toward the edge portions of the diffractive lens, and the gradient at the outermost circumference was 7°.

With regard to these two diffractive lenses, after molding the low-refractive index resin 4 by means of a mold, the peeling force when the mold is peeled off was measured. As a result, the peeling force for the first diffractive lens was 100 kgf, but the peeling force for the second diffractive lens was decreased to a half (i.e., 50 kgf), so that the mold could be easily peeled off. Furthermore, when the molded grating was observed under a microscope, it was seen that the grating was missing in the first diffractive lens, while in the second diffractive lens, such absence of the grating was not seen at all.

The percentage of the primary diffracted light at three wavelengths in the diffractive lenses formed in this manner was measured using laser light. The results are shown in Table 3. As the percentage of the primary diffracted light is greater, the performance is relatively superior. As is seen from Table 3, the performance of the second diffractive lens is superior to that of the first diffractive lens in terms of optical characteristics as well.

**(Table 3)**

| Wavelength | 460 nm | 540 nm | 633 nm |
|---|---|---|---|
| First diffractive lens | 95% | 94% | 91% |
| Second diffractive lens | 98% | 98% | 96% |

## Claims

1. A diffractive optical element comprising:
a matrix material (1) having a negative optical power;
a first resin layer (4) formed on the matrix material;
a second resin layer (5) formed on the first resin layer and having a different refractive index from the first resin layer; and
a relief pattern shape provided at an interface between the first resin layer (4) and the second resin layer (5), wherein:
the relief pattern shape consists of repetition of a pattern which is such that the thickness of the first resin layer (4) gradually decreases from the center of the first resin layer toward the edges and then subsequently sharply increases, but not at an abrupt vertical angle, in order to facilitate the peeling characteristics of the first resin from a mold and such that the generation of flare is reduced.
wherein
the refractive index of the first resin layer (4) is smaller than that of the second resin layer (5).

2. The diffractive optical element according to Claim 1, further comprising one or more resin layers successively formed on the second resin layer (5), wherein
the refractive index of each resin layer of the one or more resin layers successively formed on the second resin layer (5) is different from that of the resin layer formed underneath.

## Patentansprüche

1. Diffraktives optisches Element umfassend:
ein Matrixmaterial (1) mit einer negativen optischen Leistung;
eine erste Kunststoffschicht (4), die auf dem Matrixmaterial ausgebildet ist;
eine zweite Kunststoffschicht (5), die auf der ersten Kunststoffschicht ausgebildet ist und einen anderen Brechungsindex als die erste Kunststoffschicht aufweist; und
eine Reliefmusterform, die an einer Zwischenfläche zwischen der ersten Kunststoffschicht (4) und der zweiten Kunststoffschicht (5) vorgesehen ist, wobei:
die Reliefmusterform aus Wiederholungen eines Musters besteht, das derart ist, dass die Dicke der ersten Kunststoffschicht (4) schrittweise von der Mitte der ersten Kunststoffschicht in Richtung der Kanten abnimmt und dann anschließend steil ansteigt, jedoch nicht in einem abrupten vertikalen Winkel, um die Abschäleigenschaften des ersten Kunststoffs von einer Form zu erleichtern, und derart, dass die Erzeugung von Lichtreflexen verringert wird,
wobei
der Brechungsindex der ersten Kunststoffschicht (4) kleiner als der der zweiten Kunststoffschicht (5) ist.

2. Diffraktives optisches Element nach Anspruch 1, ferner umfassend eine oder mehrere Kunststoffschichten, die nacheinander auf der zweiten Kunststoffschicht (5) ausgebildet sind, wobei
der Brechungsindex jeder Kunststoffschicht der einen oder mehreren Kunststoffschichten, die nacheinander auf der zweiten Kunststoffschicht (5) ausgebildet sind, anders als der der darunter ausgebildeten Kunststoffschicht ist.

## Revendications

1. Elément optique diffractif comprenant :
un matériau matriciel (1) ayant une puissance optique négative ;
une première couche de résine (4) formée sur le matériau matriciel ;
une deuxième couche de résine (5) formée sur la première couche de résine et ayant un indice de réfraction différent de la première couche de résine ; et
une forme de motif en relief pourvue au niveau d'une interface entre la première couche de résine (4) et la deuxième couche de résine (5), où ;
la forme de motif en relief se compose de répétitions d'un motif qui est conçu de sorte que l'épaisseur de la première couche de résine (4) diminue graduellement du centre de la première couche de résine vers les bords et augmente par la suite de manière soudaine, mais non au niveau d'un angle vertical aigu, afin de faciliter les caractéristiques de détachement de la première résine d'un moule et de sorte que la génération d'évasement soit réduite.
où
l'indice de réfraction de la première couche de résine (4) est plus petit que celui de la deuxième couche de résine (5).

2. Elément optique diffractif selon la revendication 1, comprenant en outre une ou plusieurs couches de résine formées successivement sur la deuxième couche de résine (5), où
l'indice de réfraction de chaque couche de résine de l'une ou des plusieurs couches de résines formées successivement sur la deuxième couche de résine (5) est différent de celui de la couche de résine formée en-dessous.
